# EUROPÄISCHE PATENTSCHRIFT

(11) **EP 3 271 122 B1**
(45) Veröffentlichungstag und Bekanntmachung des Hinweises auf die Patenterteilung: **26.12.2018**
(21) Anmeldenummer: 16711197.0
(22) Anmeldetag: 15.03.2016
(51) Int. Cl.: B27M 3/00, E06B 3/56, E06B 3/10

(54) **VERFAHREN ZUR BEARBEITUNG EINES WERKSTÜCKS**
METHOD FOR MACHINING A WORKPIECE
PROCEDE D'USINAGE D'UNE PIECE

(30) Priorität: 17.03.2015 DE 102015204832
(43) Veröffentlichungstag der Anmeldung: 24.01.2018
(73) Patentinhaber: HOMAG GmbH, 72296 Schopfloch (DE)
(72) Erfinder: SCHMIEDER, Volker, 72116 Mössingen (DE)
(74) Vertreter: Grauel, Andreas
(86) Internationale Anmeldenummer: PCT/EP2016/055512
(87) Internationale Veröffentlichungsnummer: WO 2016/146614

(56) Entgegenhaltungen:
- EP-A1- 2 253 441
- CH-A- 554 479
- DE-A1-102012 005 445

## Beschreibung

### Technisches Gebiet

Die Erfindung betrifft ein Verfahren zur Bearbeitung eines Werkstücks, insbesondere für ein Flügelprofil eines Fensterflügelrahmens, wobei eine erste Bearbeitung des Werkstücks mittels einer ersten Bearbeitungsvorrichtung erfolgt zum Herstellen einer bearbeiteten ersten Fläche zum Aufbringen eines Klebemittels, wobei nach dem Aufbringen des Klebemittels eine weitere Bearbeitung des Werkstücks erfolgt.

Ein Verfahren zur Herstellung eines Schenkels eines Fensterflügelrahmens aus Kunststoff wird beispielsweise durch die CH 554 479 beschrieben. Ein Verfahren zur Bearbeitung eines Werkstücks, wobei eine erste Bearbeitung des Werkstücks mittels einer ersten Bearbeitungsvorrichtung erfolgt zum Herstellen einer bearbeiteten ersten Fläche zum Aufbringen eines Klebemittels, wobei nach dem Aufbringen des Klebemittels eine weitere Bearbeitung des Werkstücks erfolgt wird beispielsweise durch die EP 2 253 441 beschrieben.

### Stand der Technik

Das bewegliche und üblicherweise zu öffnende Element eines Fensters, der Fensterflügel, besteht üblicherweise aus einem Fensterflügelrahmen und einer darin eingesetzten Scheibe. Dabei besteht der Fensterflügelrahmen üblicherweise aus einer Mehrzahl von Flügelprofilen, die miteinander verbunden sind und die eingesetzte Scheibe umschließen und halten.

Um den Lichtdurchlass von Fenstern weiter zu erhöhen, werden die Flügelprofile in ihrer Breite immer schmäler vorgesehen. Gleichzeitig werden die von dem Fensterflügelrahmen zu tragenden Scheiben in ihrer Fläche immer größer gewählt, um dadurch den Lichtdurchlass bei gleicher Fenstergröße zu vergrößern. Dadurch wird eine verbesserte Helligkeit im Innenraum bewirkt, was derzeit im Trend liegt und die Behaglichkeit in Räumen erhöht.

Darüber hinaus wird aus energetischen Gründen bei der Scheibe immer häufiger ein Aufbau als Isolierglasscheibe mit drei Scheiben verwendet, anstatt wie früher eher üblich nur zwei Scheiben zu verwenden. Dies reduziert den Wärmeübergang durch die Scheibe und ist aus energetischen Gründen zu bevorzugen. Dies führt allerdings zu höheren Scheiben- und Fensterflügelgewichten und entsprechend zu erhöhten wirkenden Kräften, welche von immer schmäler werdenden Fensterflügelrahmen aufzunehmen und weiterzuleiten sind.

Aus diesem Grund verkleben Fensterhersteller neuerdings den Fensterflügelrahmen mit der Scheibe, so dass die Scheibe einen Anteil an der statischen Funktion übernimmt. Dies erfolgt allerdings versteckt im Bereich des Glasfalzüberschlags oder des Glasfalzes. Dabei werden aktuell aufzutragende Nassklebstoffe verwendet, die dort unmittelbar auf das Flügelprofil aufgetragen werden, wo anschließend die Scheibe zu verkleben ist. Ein Aufbringen von einem Klebeband statt des Nassklebstoffs wird derzeit eher abgelehnt, weil das Klebeband auf den rohen Werkstoff, wie beispielsweise auf das rohe Holz, aufzubringen wäre. Dazu müsste ein zuvor vorbehandeltes Werkstück eines Schenkels eines Fensterflügelrahmens nachträglich wieder bearbeitet werden, um eine rohe Oberfläche zu schaffen, die zum Verkleben geeignet wäre. Dadurch wäre ein zusätzlicher Arbeitsgang notwendig, was die Herstellung verkomplizieren würde. Eine Maschine zur Aufbringung eines Klebebands wird beispielsweise durch die DE 689 04 098 T2 beschrieben.

Das Verkleben der Scheibe mit einem Nassklebstoff bringt allerdings auch Nachteile mit sich, insbesondere für kleinere Betriebe, weil der Nassklebstoff unter definierten Umgebungsbedingungen, also bei vorgegebener Temperatur und Luftfeuchtigkeit bei definierter Staubfreiheit verarbeitet werden muss, und darüber hinaus auch die Dosierung sehr genau vorzunehmen ist. Dies von Hand exakt aufzutragen ist nahezu nicht möglich und dafür zu verwendende Applikationsanlagen sind relativ teuer, was es für kleine und mittlere Betriebe nicht wirtschaftlich macht.

### Darstellung der Erfindung, Aufgabe, Lösung, Vorteile

Es ist die Aufgabe der Erfindung, ein Verfahren zu schaffen, mittels welchem man eine Verklebung mittels eines Klebemittels einfach und unkompliziert erreichen kann und die Verklebung dennoch kostengünstig zu bewirken ist.

Diese Aufgabe wird mit den Merkmalen von Anspruch 1 gelöst.

Ein Ausführungsbeispiel der Erfindung betrifft ein Verfahren zur Bearbeitung eines Werkstücks, insbesondere für ein Flügelprofil eines Fensterflügelrahmens, wobei eine erste Bearbeitung des Werkstücks mittels einer ersten Bearbeitungsvorrichtung erfolgt zum Herstellen einer bearbeiteten ersten Fläche zum Aufbringen eines Klebemittels, wobei nach dem Aufbringen des Klebemittels eine weitere Bearbeitung des Werkstücks erfolgt. So kann das Klebemittel auf einer insbesondere auf Endmaß bearbeiteten Fläche aufgebracht werden, bevor die verbleibenden Flächen des Werkstückes bearbeitet werden. Dies kann vorteilhaft auch automatisiert werden und in den Bearbeitungsprozess einfach implementiert werden.

Dabei ist es besonders vorteilhaft, wenn die erste Bearbeitung zum Herstellen der ersten Fläche derart erfolgt, dass die erste Fläche dadurch auf ein Endmaß bearbeitet ist. So kann das Klebemittel auf eine Fläche aufgebracht werden, die nicht weiter bearbeitet werden muss, weil sie bereits auf Endmaß bearbeitet worden ist. Dabei bedeutet der Begriff des Bearbeitens, das beispielsweise spanende bzw. spanabhebende auf Maß bringen, also einen Materialabtrag vorzunehmen, um das Werkstück an der bearbeiteten Stelle auf ein vorgegebenes Maß zu bringen. Dies gilt für die erste Bearbeitung als auch für die weitere Bearbeitung. Dies sind entsprechend formgebende Bearbeitungen.

Erfindungsgemäß ist es, wenn die erste Bearbeitung zum Herstellen der ersten Fläche auch eine zweite Fläche bearbeitet, welche der ersten Fläche benachbart ist, wobei die zweite Fläche derart angeordnet ist, dass sie im Wesentlichen einem Schattenbereich des auf die ersten Fläche aufgebrachten Klebemittels entspricht. Dadurch kann eine benachbarte Fläche ebenso bearbeitet werden, die bei einer nachfolgenden Bearbeitung nicht bearbeitet werden könnte, ohne das bereits aufgetragene Klebemittel zu beschädigen.

Dabei ist es auch vorteilhaft, wenn die erste Bearbeitung zum Herstellen der zweiten Fläche derart erfolgt, dass auch die zweite Fläche dadurch auf ein Endmaß bearbeitet ist. So kann auch diesbezüglich ein weiterer Bearbeitungsschritt vermieden werden, der das Klebemittel beeinträchtigen könnte.

Gemäß des Erfindungsgedankens ist es vorteilhaft, wenn die weitere Bearbeitung eine Bearbeitung zumindest einzelner verbleibender Flächen des Werkstücks auf Endmaß ist. So wird das Werkstück nach dem Aufbringen des Klebemittels dann vorteilhaft in einer weiteren Bearbeitungsvorrichtung an verbleibenden Seiten bearbeitet, um es insgesamt auf Endmaß zu bringen, damit es in nachfolgenden Verfahrensschritten gegebenenfalls gereinigt, oberflächenbearbeitet, wie beispielsweise lackiert, und montiert werden kann. Dabei kann die Oberflächenbehandlung vorteilhaft auch eine Vorbehandlung sein oder umfassen, wie beispielsweise ein Aufbringen eines Primers etc.

So ist es grundsätzlich auch möglich, dass die weitere Bearbeitung in einem Verfahrensschritt oder in mehreren Verfahrensschritten erfolgt. So kann je nach Bedarf an Bearbeitung verschiedener Flächen des Werkstücks dieses nacheinander mittels verschiedenen Werkzeugen bearbeitet werden.

Auch ist es vorteilhaft, wenn die erste Bearbeitung auf einer Hobelmaschine oder Fräsmaschine erfolgt. So kann mittels der Hobelmaschine oder der Fräsmaschine eine Vorbearbeitung verschiedener Flächen des Werkstücks erfolgen und gleichzeitig auch die Bearbeitung der ersten Fläche und optional der zweiten Fläche vorgenommen werden.

Besonders vorteilhaft ist weiterhin, wenn die weitere Bearbeitung auf einer zweiten Bearbeitungsvorrichtung erfolgt, wie insbesondere auf einer Fräsmaschine erfolgt und insbesondere auf einer Profiliermaschine oder auf einem Bearbeitungszentrum erfolgt. Dadurch kann die erste Bearbeitung auf einer ersten Bearbeitungsvorrichtung erfolgen und die weitere Bearbeitung auf einer gesonderten weiteren zweiten Bearbeitungsvorrichtung durchgeführt werden, so dass die erste Bearbeitungsvorrichtung dann wieder für die Bearbeitung des nächsten Werkstücks frei wird.

Auch ist es besonders vorteilhaft, wenn nach dem Herstellen der ersten Fläche und vor dem Aufbringen des Klebemittels das Werkstück oder die erste Fläche des Werkstücks mittels einer Reinigungsvorrichtung gereinigt wird. Dadurch kann die erste Fläche von Staub und/oder Spänen etc. befreit werden, so dass ein Aufbringen des Klebemittels unkompliziert und sicher möglich ist. Vor dem Aufbringen des Klebemittels kann dabei vorteilhaft auch eine Vorbehandlung durchgeführt werden, wie das Aufbringen eines Primers o.ä.

Auch ist es zweckmäßig, wenn das Aufbringen des Klebemittels automatisiert von einer Kaschiervorrichtung oder einer Applikationsvorrichtung erfolgt. Dadurch kann eine sichere Aufbringung des Klebemitttels erreicht werden. Alternativ dazu könnte auch ein manuelles Aufbringen vorteilhaft sein, wenn das Aufbringen insbesondere nach einer Handlungsanweisung vorgenommen wird und an den geforderten Stellen erfolgt.

Besonders vorteilhaft ist es, wenn die erste Bearbeitungsvorrichtung und die Kaschiervorrichtung oder Applikationsvorrichtung miteinander gekoppelt oder verbunden sind, um die Herstellung der ersten Fläche und das Aufbringen des Klebemittels auf die erste Fläche miteinander zu verbinden. Dadurch kann dies quasi in einem Durchgang erfolgen, was das Verfahren vereinfacht.

Auch können alternativ oder zusätzlich die Kaschiervorrichtung oder Applikationsvorrichtung und die zweite Bearbeitungsvorrichtung miteinander gekoppelt oder verbunden sein, um das Aufbringen des Klebemittels auf die erste Fläche und die weitere Bearbeitung des Werkstücks miteinander zu verbinden. Auch dies kann Vorteile in der Verfahrensführung bei gesteigerter Effektivität haben, weil das Handhaben und gegebenenfalls das Zwischenspeichern der Werkstücke dazwischen entfallen kann.

Gemäß des erfindungsgemäßen Gedankens ist es vorteilhaft, wenn das Klebemittel ein Klebeband aufweist oder ist. Dieses kann aufgerollt oder anderweitig aufgebracht werden. Dabei kann das Klebeband auch zusätzlich mit einer Klebemasse versehen werden, die nach dem Auftragen des Klebebands zumindest bereichsweise aufgebracht werden kann.

Dabei kann es auch vorteilhaft sein, wenn das Klebemittel eine Klebemasse aufweist oder ist, welche insbesondere eine pastöse oder fluide Klebemasse ist. Diese kann vorteilhaft auf vorbezeichnete Positionen aufgetragen werden. Das Auftragen kann dabei beispielsweise mittels einer Düse als Aufspritzen erfolgen. Auch kann die Klebemasse oder das Klebemittel mittels einer Spritze, Walze, Rolle oder anderweitig aufgetragen oder aufgebracht werden. Dabei kann die Masse beispielsweise auch später erst aktiviert werden, so dass sie erst nach dem Aktivieren klebend ist. So kann das Klebeband beispielsweise auch Fenster aufweisen, in welche die Klebemasse eingebracht wird, so dass neben dem Klebeband auch die Klebemasse eingesetzt werden kann.

Auch ist es vorteilhaft, wenn die Werkstücke zumindest teilweise auf Gehrung gesägt oder gefräst werden und auf Gehrung miteinander verbunden werden. Dadurch kann eine einfache Verbindung realisiert werden, die aufgrund der Verklebung mit einer Scheibe auch zu einer ausreichenden Gesamtstabilität führt, weil die Scheibe selbst zur Stabilität beiträgt.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: eine schematische Darstellung eines Werkstücks für ein Flügelprofil eines Fensterflügelrahmens vor der ersten Bearbeitung,
- Fig. 2: eine schematische Darstellung des Werkstücks für ein Flügelprofil eines Fensterflügelrahmens gemäß Figur 1 nach der ersten Bearbeitung und nach der Applikation des Klebestreifens,
- Fig. 3: eine schematische Darstellung eines Werkstücks gemäß Figur 2 zusätzlich mit einer Darstellung eines Profils eines Endkonturfräsers, und
- Fig. 4: ein Blockdiagramm zur Erläuterung des erfindungsgemäßen Verfahrens.

### Bevorzugte Ausführung der Erfindung

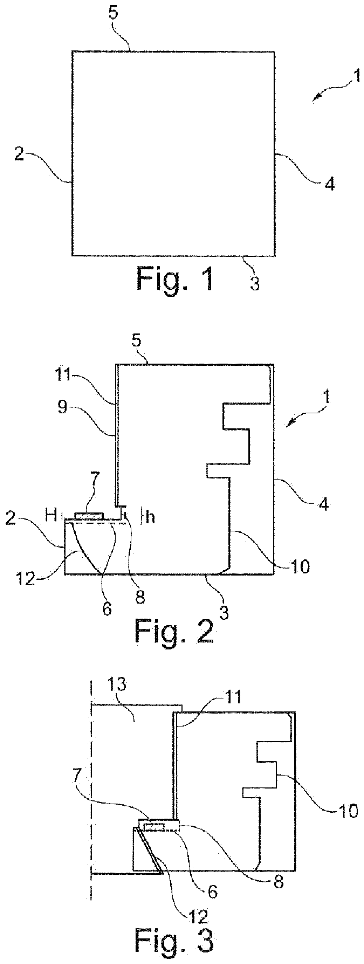

Die Figur 1 zeigt ein Werkstück 1 im Querschnitt. Das Werkstück 1 ist im Ausführungsbeispiel der Figur 1 im Schnitt im Wesentlichen rechteckig oder alternativ quadratisch ausgebildet und weist eine in der nicht dargestellten Längsrichtung eine lang gestreckte stabartige Form auf. Auch können bereits vorgesehene und anderweitig eingebrachte Falze in dem Werkstück vorgesehen sein.

Das Werkstück 1 wird nach der Bearbeitung beispielsweise als Schenkel bzw. Flügelprofil eines Fensterflügelrahmens verwendet, welcher bzw. welches zu einem Fensterflügelrahmen zusammengesetzt werden kann und welcher bzw. welches dann mit einer Scheibe des Fensterflügels verklebbar ist.

Das Werkstück 1 weist vor seiner Bearbeitung vorteilhaft vier umlaufende Seitenflächen 2, 3, 4 und 5 auf, die im Nachfolgenden bearbeitet werden.

Die Figur 2 zeigt das Werkstück 1 nach einer ersten Bearbeitung im Bereich der Seitenflächen 2 und 5. Die erste Bearbeitung des Werkstücks 1 erfolgt mittels einer ersten Bearbeitungsvorrichtung zum Herstellen einer bearbeiteten ersten Fläche 6 zum Aufbringen eines Klebebands 7 auf der ersten Fläche 6.

Dabei wird in den Ausführungsbeispielen das erfindungsgemäße Verfahren anhand des Aufbringens eines Klebebands beschrieben, wobei statt des Klebebands auch ein alternatives Klebemittel aufgebracht werden kann. Dabei kann das Klebemittel allgemein das Klebeband oder auch eine Klebemasse sein, die aufgetragen wird. Auch kann zusätzlich zu einem Klebeband auch eine Klebemasse aufgetragen werden. Dies gilt entsprechend für sämtliche in den vorliegenden Anmeldungsunterlagen beschriebenen Ausführungsbeispiele und wird im Folgenden nicht noch einmal explizit wiederholt.

Die erste Fläche 6 ist dabei im Wesentlichen parallel zu den Seitenflächen 3, 5 ausgebildet und steht im Wesentlichen senkrecht zur Seitenfläche 2. Die erste Bearbeitung zum Herstellen der ersten Fläche 6 erfolgt dabei derart, dass die erste Fläche 6 dadurch auf ein Endmaß bearbeitet ist.

So kann auf die erste Fläche 6 das Klebeband 7 appliziert werden, so dass es sicher aufgeklebt ist.

Dabei ist weiterhin zu erkennen, dass die erste Bearbeitung zum Herstellen der ersten Fläche 6 auch eine zweite Fläche 8 bearbeitet, welche der ersten Fläche 6 benachbart ist, wobei die zweite Fläche 8 derart angeordnet ist, dass sie im Wesentlichen einem Schattenbereich des auf die ersten Fläche 6 aufgeklebten Klebebands 7 entspricht. Die zweite Fläche 8 ist dabei im Wesentlichen senkrecht zur ersten Fläche 6 angeordnet und weist eine Höhe h auf, die zumindest etwas größer ist als die Höhe H des aufgebrachten Klebebands 7. Dabei ist die erste Bearbeitung zum Herstellen der zweiten Fläche 8 auch derart ausgeführt, dass auch die zweite Fläche 8 dadurch auf ein Endmaß bearbeitet ist. Dies ist deshalb vorteilhaft, weil dadurch eine spätere Bearbeitung der ersten Fläche 6 und auch der zweiten Fläche 8 vermieden werden kann, bei welcher das aufgebrachte Klebeband 7 beschädigt oder beeinträchtigt werden könnte.

Weiterhin ist zu erkennen, dass oberhalb der zweiten Fläche 8 die Seitenfläche 2 bis hin zur Seitenfläche 5 als Fläche 9 bearbeitet ist. Dies kann jedoch nur auf ein Rohmaß einer Vorprofilierung erfolgen, so dass diese Fläche 9 gegebenenfalls später in einem nachfolgenden Bearbeitungsschritt auf ein Endmaß bearbeitet wird. Optional kann diese Fläche 9 aber auch als Teil der zweiten Fläche 8 auf Endmaß bearbeitet sein.

Die Figur 2 zeigt das Endmaß 10, 11, 12, auf das das Werkstück 1 in einer weiteren Bearbeitung gebracht wird. Dies erfolgt nach dem Aufbringen des Klebebands 7 auf die erste Fläche 6.

Dabei kann die weitere Bearbeitung eine Bearbeitung zumindest einzelner verbleibender Flächen des Werkstücks auf Endmaß sein, wobei die weitere Bearbeitung in einem Verfahrensschritt oder in mehreren Verfahrensschritten erfolgt bzw. erfolgen wird. Die Figur 3 zeigt nach dem Aufbringen des Klebebands 7, dass die linke Seite des Werkstücks 1 in den Bereichen des Endmaßes 11, 12 mittels eines Endprofilfräsers 13 auf sein Endmaß bearbeitet wird. Anschließend kann mittels eines weiteren Endprofilfräsers auch die rechte Seite des Werkstücks 1 im Bereich des Endmaßes 10 endbearbeitet werden. Dies ist jedoch nicht dargestellt.

Gemäß des erfindungsgemäßen Gedankens erfolgt die erste Bearbeitung auf einer ersten Bearbeitungsvorrichtung 14, die als Hobelmaschine oder als Fräsmaschine ausgebildet ist.

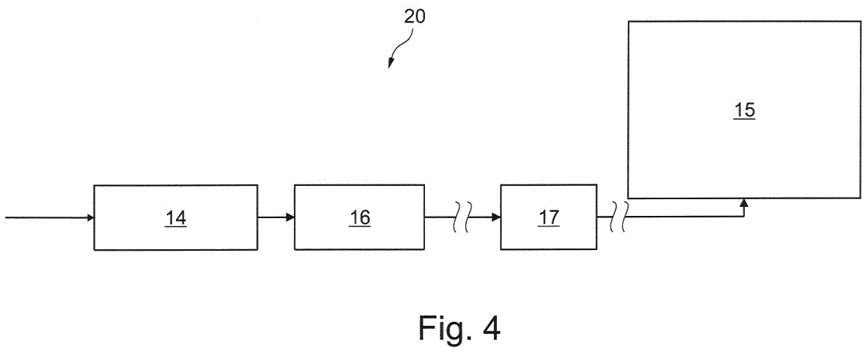

Die weitere Bearbeitung erfolgt dabei vorteilhaft auf einer zweiten Bearbeitungsvorrichtung 15, wie insbesondere auf einer Fräsmaschine, die insbesondere als eine Profiliermaschine oder als ein Bearbeitungszentrum ausgebildet ist. Dies ist in Figur 4 in Form eines Blockdiagramms 20 dargestellt.

Dabei wird nach dem Herstellen der ersten Fläche und vor dem Aufbringen des Klebebands 7 das Werkstück 1 oder die erste Fläche 6 des Werkstücks 1 mittels einer Reinigungsvorrichtung 16 gereinigt. Dies kann ein Abblasen von Staub oder Spänen sein. Auch kann es eine andere Art der Reinigung sein.

Nach dem Reinigen wird das Klebeband 7 aufgebracht. Dabei ist es vorteilhaft, wenn das Aufbringen des Klebebands 7 automatisiert von einer Kaschiervorrichtung 17 erfolgt. Dabei kann im Falle einer anderweitigen Auftragung des Klebemittels statt einer Kaschiervorrichtung 17 auch eine allgemeine Applikationseinheit 17 vorgesehen sein, mittels welcher das Klebemittel aufbringbar ist.

Gemäß des Erfindungsgedankens ist es vorteilhaft, wenn die erste Bearbeitungsvorrichtung 14 und die Kaschiervorrichtung 17 bzw. Applikationsvorrichtung 17 miteinander gekoppelt oder verbunden sind, um die Herstellung der ersten Fläche 6 und das Aufbringen des Klebebands 7 auf die erste Fläche 6 miteinander zu verbinden. Auch kann diese Kopplung alternativ entfallen.

Alternativ oder zusätzlich kann die Kaschiervorrichtung 17 oder Applikationsvorrichtung 17 und die zweite Bearbeitungsvorrichtung 15 miteinander gekoppelt oder verbunden sein, um das Aufbringen des Klebebands 7 auf die erste Fläche 6 und die weitere Bearbeitung miteinander zu verbinden. Auch kann diese Kopplung alternativ entfallen.

Dabei kann durch die Kaschiervorrichtung bzw. Applikationsvorrichtung 17 sowohl ein Klebemittel aufgebracht werden, welches eine Klebemasse, ein Klebeband oder auch eine Applikation eines Klebebands und einer Klebemasse ist. Auch können anderweitige Klebemittel vorgesehen sein. Das oder die Klebemittel können beispielsweise auch mittels einer Schutzfolie oder Ähnlichem abgedeckt sein. Dabei kann die Applikationsvorrichtung nicht nur ein Klebeband aufbringen, wie mittels Rollen aufrollen, sie kann alternativ oder zusätzlich auch das Klebemittel mittels Walzen aufwalzen, oder mittels Spritzen aufbringen, wie auch mittels Düsen auftragen.

Die bearbeiteten Werkstücke können vorteilhaft zu einem Fensterrahmen oder zu einem Fensterflügelrahmen oder Ähnliches zusammengefügt werden. Dabei ist es auch vorteilhaft, wenn die Werkstücke an zumindest einem ihrer Enden auf Gehrung gesägt oder gefräst werden, um zwei Werkstücke auf Gehrung miteinander zu verbinden. Auch können andere Verbindungsarten gewählt werden, so dass die Werkstücke stumpf aufeinander stoßen und beispielsweise verzapft werden oder anderweitig verbunden werden. Das Ablängen und auf Gehrung sägen bringt jedoch den Vorteil, dass eine einfache Verarbeitung und Anpassung der zu verbindenden Werkstücke erfolgt, wobei durch das Verkleben einer Scheibe auch diese zur Stabilität beiträgt und der zusammengefügte Rahmen in seiner Stabilität nicht so stark ausgelegt sein braucht.

### Bezugszeichenliste

- 1: Werkstück
- 2: Seitenfläche
- 3: Seitenfläche
- 4: Seitenfläche
- 5: Seitenfläche
- 6: erste Fläche
- 7: Klebeband
- 8: zweite Fläche
- 9: Fläche
- 10: Endmaß
- 11: Endmaß
- 12: Endmaß
- 13: Endprofilfräser
- 14: erste Bearbeitungsvorrichtung
- 15: zweite Bearbeitungsvorrichtung
- 16: Reinigungsvorrichtung
- 17: Kaschiervorrichtung, Applikationsvorrichtung
- 20: Blockdiagramm

## Patentansprüche

1. Verfahren zur Bearbeitung eines Werkstücks (1), insbesondere für ein Flügelprofil eines Fensterflügelrahmens, wobei eine erste Bearbeitung des Werkstücks (1) mittels einer ersten Bearbeitungsvorrichtung (14) erfolgt zum Herstellen einer bearbeiteten ersten Fläche (6) zum Aufbringen eines Klebemittels (7), wobei nach dem Aufbringen des Klebemittels (7) eine weitere Bearbeitung des Werkstücks erfolgt, **dadurch gekennzeichnet, dass** die erste Bearbeitung zum Herstellen der ersten Fläche (6) auch eine zweite Fläche (8) bearbeitet, welche der ersten Fläche (6) benachbart ist, wobei die zweite Fläche (8) derart angeordnet ist, dass sie im Wesentlichen einem Schattenbereich des auf die ersten Fläche (6) aufgeklebten Klebemittels (7) entspricht.

2. Verfahren nach Anspruch 1, **dadurch gekennzeichnet, dass** die erste Bearbeitung zum Herstellen der ersten Fläche (6) derart erfolgt, dass die erste Fläche (6) dadurch auf ein Endmaß bearbeitet ist.

3. Verfahren nach Anspruch 2, **dadurch gekennzeichnet, dass** die erste Bearbeitung zum Herstellen der zweiten Fläche (8) derart erfolgt, dass auch die zweite Fläche (8) dadurch auf ein Endmaß bearbeitet ist.

4. Verfahren nach einem der vorhergehenden Ansprüche, **dadurch gekennzeichnet, dass** die weitere Bearbeitung eine Bearbeitung zumindest einzelner verbleibender Flächen des Werkstücks auf Endmaß (10,11,12) ist.

5. Verfahren nach Anspruch 4, **dadurch gekennzeichnet, dass** die weitere Bearbeitung in einem Verfahrensschritt oder in mehreren Verfahrensschritten erfolgt.

6. Verfahren nach einem der vorhergehenden Ansprüche, **dadurch gekennzeichnet, dass** die erste Bearbeitung auf einer ersten Bearbeitungsmaschine (14) erfolgt, welche eine Hobelmaschine oder eine Fräsmaschine ist.

7. Verfahren nach einem der vorhergehenden Ansprüche, **dadurch gekennzeichnet, dass** die weitere Bearbeitung auf einer zweiten Bearbeitungsvorrichtung (15) erfolgt, wie insbesondere auf einer Fräsmaschine erfolgt und insbesondere auf einer Profiliermaschine oder auf einem Bearbeitungszentrum erfolgt.

8. Verfahren nach einem der vorhergehenden Ansprüche, **dadurch gekennzeichnet, dass** nach dem Herstellen der ersten Fläche (6) und vor dem Aufbringen des Klebemittels (7) das Werkstück (1) oder die erste Fläche (6) des Werkstücks (1) mittels einer Reinigungsvorrichtung (16) gereinigt und/oder eine Vorbehandlung vorgenommen wird.

9. Verfahren nach einem der vorhergehenden Ansprüche, **dadurch gekennzeichnet, dass** das Aufbringen des Klebemittels (7) automatisiert von einer Kaschiervorrichtung oder einer Applikationsvorrichtung (17) erfolgt.

10. Verfahren nach Anspruch 9, **dadurch gekennzeichnet, dass** die erste Bearbeitungsvorrichtung (14) und die Kaschiervorrichtung oder Applikationsvorrichtung (17) miteinander gekoppelt oder verbunden sind, um die Herstellung der ersten Fläche (6) und das Aufbringen des Klebemittels (7) auf die erste Fläche (6) miteinander zu verbinden.

11. Verfahren zumindest nach Anspruch 10 und nach Anspruch 7, **dadurch gekennzeichnet, dass** die Kaschiervorrichtung oder Applikationsvorrichtung (17) und die zweite Bearbeitungsvorrichtung (15) miteinander gekoppelt oder verbunden sind, um das Aufbringen des Klebemittels (7) auf die erste Fläche (6) und die weitere Bearbeitung miteinander zu verbinden.

12. Verfahren nach einem der vorhergehenden Ansprüche, **dadurch gekennzeichnet, dass** das Klebemittel ein Klebeband aufweist oder ist.

13. Verfahren nach einem der vorhergehenden Ansprüche, **dadurch gekennzeichnet, dass** das Klebemittel eine Klebemasse aufweist oder ist, welche insbesondere eine pastöse oder fluide Klebemasse ist.

14. Verfahren nach einem der vorhergehenden Ansprüche, **dadurch gekennzeichnet, dass** die Werkstücke zumindest teilweise auf Gehrung gesägt oder gefräst werden und auf Gehrung miteinander verbunden werden.

## Claims

1. A method for machining a workpiece (1), in particular for a profiled leaf element of a window leaf frame, wherein the workpiece (1) is first machined using a first machining device (14) in order to produce a machined first surface (6) to which an adhesive (7) is to be applied, wherein the workpiece is machined further once the adhesive (7) has been applied, **characterised in that** the first machining for producing the first surface (6) also machines a second surface (8) which is adjacent to the first surface (6), wherein the second surface (8) is arranged in such a way that it corresponds substantially to a shadow area of the adhesive (7) applied to the first surface (6).

2. The method as claimed in claim 1, **characterised in that** the first machining for producing the first surface (6) is carried out in such a way that the first surface (6) is machined to a final dimension as a result.

3. The method as claimed in claim 2, **characterised in that** the first machining for producing the second surface (8) is carried out in such a way that the second surface (8) is also machined to a final dimension as a result.

4. The method as claimed in one of the preceding claims, **characterised in that** the further machining is machining of at least individual remaining surfaces of the workpiece to final dimension (10, 11, 12).

5. The method as claimed in claim 4, **characterised in that** the further machining is carried out in one method step or in multiple method steps.

6. The method as claimed in one of the preceding claims, **characterised in that** the first machining is carried out on a first machining machine (14), which is a planing machine or a milling machine.

7. The method as claimed in one of the preceding claims, **characterised in that** the further machining is carried out on a second machining device (15), such as in particular on a milling machine, and in particular on a profiling machine or on a machining centre.

8. The method as claimed in one of the preceding claims, **characterised in that**, following the production of the first surface (6) and before the application of the adhesive (7), the workpiece (1) or the first surface (6) of the workpiece (1) is cleaned by means of a cleaning device (16) and/or a pre-treatment is carried out.

9. The method as claimed in one of the preceding claims, **characterised in that** the application of the adhesive (7) is carried out automatically by a laminating device or an application device (17).

10. The method as claimed in claim 9, **characterised in that** the first machining device (14) and the laminating device or application device (17) are coupled or connected to one another in order to combine the production of the first surface (6) and the application of the adhesive (7) to the first surface (6) with one another.

11. The method as claimed at least in claim 10 and claim 7, **characterised in that** the laminating device or application device (17) and the second machining device (15) are coupled or connected to one another in order to combine the application of the adhesive (7) to the first surface (6) and the further machining with one another.

12. The method as claimed in one of the preceding claims, **characterised in that** the adhesive has or is an adhesive tape.

13. The method as claimed in one of the preceding claims, **characterised in that** the adhesive has or is an adhesive compound which, in particular, is a pasty or fluid adhesive compound.

14. The method as claimed in one of the preceding claims, **characterised in that** the workpieces are at least partly mitre-sawn or mitre-milled and mitred to one another.

## Revendications

1. Procédé pour l'usinage d'une pièce (1), en particulier pour un profilé d'un cadre de battant de fenêtre, où un premier usinage de la pièce (1) est effectué au moyen d'un premier dispositif d'usinage (14) permettant la réalisation d'une première surface usinée (6) servant à l'application d'un moyen de collage (7) où, après l'application du moyen de collage (7), est effectué un autre usinage de la pièce, caractérisé en que le premier usinage permettant la réalisation de la première surface (6) traite également une deuxième surface (8) qui est adjacente à la première surface (6), où la deuxième surface (8) est disposée de manière telle, qu'elle corresponde pratiquement à une zone d'ombre du moyen de collage (7) appliqué sur la première surface (6).

2. Procédé selon la revendication 1, **caractérisé en ce que** le premier usinage permettant la réalisation de la première surface (6) est effectué de manière telle, que la première surface (6) soit usinée ainsi à une cote définitive.

3. Procédé selon la revendication 2, **caractérisé en ce que** le premier usinage permettant la réalisation de la deuxième surface (8) est effectué de manière telle, que la deuxième surface (8) soit usinée ainsi, elle aussi, à une cote définitive.

4. Procédé selon l'une quelconque des revendications précédentes, **caractérisé en ce que** l'autre usinage est un usinage, à une cote définitive (10, 11, 12), d'au moins différentes surfaces de la pièce, qui restent.

5. Procédé selon la revendication 4, **caractérisé en ce que** l'autre usinage est effectué en une étape du procédé ou en plusieurs étapes du procédé.

6. Procédé selon l'une quelconque des revendications précédentes, **caractérisé en ce que** le premier usinage est effectué sur une première machine d'usinage (14) qui est une raboteuse ou une fraiseuse.

7. Procédé selon l'une quelconque des revendications précédentes, **caractérisé en ce que** l'autre usinage est effectué sur une deuxième machine d'usinage (15), tel qu'il est effectué en particulier sur une fraiseuse et qu'il est effectué en particulier sur une machine à profiler ou sur un centre d'usinage.

8. Procédé selon l'une quelconque des revendications précédentes, **caractérisé en ce qu'**après la réalisation de la première surface (6) et avant l'application du moyen de collage (7), la pièce (1) ou la première surface (6) de la pièce (1) est nettoyée au moyen d'un dispositif de nettoyage (16) et / ou on procède à un prétraitement.

9. Procédé selon l'une quelconque des revendications précédentes, **caractérisé en ce que** l'application du moyen de collage (7) est effectuée de manière automatisée par un dispositif de contrecollage ou par un dispositif applicateur (17).

10. Procédé selon la revendication 9, **caractérisé en ce que** le premier dispositif d'usinage (14) et le dispositif de contrecollage ou le dispositif applicateur (17) sont couplés l'un à l'autre ou combinés l'un avec l'autre, pour que la réalisation de la première surface (6) et l'application du moyen de collage (7) sur la première surface (6) soient combinées l'une avec l'autre.

11. Procédé au moins selon la revendication 10 et selon la revendication 7, **caractérisé en ce que** le dispositif de contrecollage ou le dispositif applicateur (17) et le deuxième dispositif d'usinage (15) sont couplés l'un à l'autre ou combinés l'un avec l'autre, pour que l'application du moyen de collage (7) sur la première surface (6) et l'autre usinage soient combinés l'un avec l'autre.

12. Procédé selon l'une quelconque des revendications précédentes, **caractérisé en ce que** le moyen de collage présente ou est une bande adhésive.

13. Procédé selon l'une quelconque des revendications précédentes, **caractérisé en ce que** le moyen de collage présente ou est une masse adhésive qui est en particulier une masse adhésive pâteuse ou fluide.

14. Procédé selon l'une quelconque des revendications précédentes, **caractérisé en ce que** les pièces sont au moins en partie sciées ou fraisées en onglet et assemblées en onglet les unes aux autres.
